# EUROPEAN PATENT APPLICATION

(11) **EP 2 407 021 A1**
(43) Date of publication of application: **18.01.2012**
(21) Application number: 10169656.5
(22) Date of filing: 15.07.2010
(51) Int. Cl.: A01D 34/90, B25F 3/00, F16D 1/10

(54) **Hand-held powered working machine and power transmission joint therefor**

(71) Applicant: Nishigaki Industrial Co., Ltd., Hyogo 673-0404 (JP)
(72) Inventor: Nishigaki, Takanobu, Miki-shi Hyogo 673-0404 (JP)
(74) Representative: Karl, Frank

(57) **Abstract**

A power transmission joint (40) of a hand-held powered working machine (1) comprises a joint sleeve having, on a front side thereof, a power input fitting portion (41a) or a power input engaging shaft portion (44,45a) co-rotatably engaged with a power input end portion (27b) of a working device (10) and also having, on a rear side thereof, an insert fitting portion (41b) into which an insert (42) is fitted and embedded. The insert (42) has a drive shaft fitting portion (42b) co-rotatably engaged with a drive front end portion (50a) of a drive shaft (50) of an operation lever or pipe (3). This allows the drive front end portion (50a) of the drive shaft (50) and the power input end portion (27b) of the working device (10) to co-rotatably engage with each other, even if the drive front end portion (50a) and the power input end portion (27b) have different or non-matching shapes to prevent direct rotational engagement with each other, making it possible to reduce the purchase cost for replacement and the burden of storage space.

## Description

### Technical Field

The present invention relates to a hand-held powered working machine having an operation lever, a working device and a power transmission joint, and to the power transmission joint therefor, in which a drive front end portion of a drive shaft in the operation lever and a power input end portion of the working device are operationally coupled with each other by the power transmission joint.

### Background Art

A hand-held powered working machine such as a mower, a grass cutter, a hedge trimmer, a high branch cutter or the like, each having a working device, is normally sold with the working device attached to a drive front end portion of an engine-powered or motor-powered operation lever. As shown in FIG. 6 of Japanese Laid-open Patent Publication Sho 64-30510, which represents many cases of such attachment, the working device is attached such that a drive front end portion of an operation lever 7 made of a metal pipe is fitted into and held by a rear end portion of a short tube provided in the working device, and fastened with a bolt to prevent its falling off. At the same time, a drive front end portion of a drive shaft 11 is inserted into and engaged with a power input end portion (i.e. hollow shaft portion of a bevel gear 27) of the working device, so as to transmit the rotational force of a drive power source (engine or electric motor) output from the drive power source to the power input end portion of the working device through the drive shaft 11. Here, various engagements such as spline engagement and serration engagement can be used to engage the drive front end portion of the drive shaft 11 with the power input end portion, while various numbers of teeth such as from 6 to 13, depending on their manufacturers and models, can be used for the spline or serration engagement.

Recently, there are cases where powered operation levers and working devices are individually sold so that when either the powered operation lever or the working device of a hand-held powered working machine which are defected, the user can purchase only the former or only the latter for replacement. Further, in order to allow reduction of the purchase cost, some of hand-held powered working machines are designed so that a powered operation lever allows various working devices to be attached thereto adapted to various works. Conventionally, in order to achieve this design, the shape of the drive front end portion of the drive shaft has been required to match the shape of the inner wall of the power input end portion of each working device.

### Disclosure of Invention

However, to check and match the two shapes, i.e. the shape of the drive front end portion of the drive shaft and the shape of the power input end portion of the working device, is time-consuming and likely to cause wrong matching. Further, many users may purchase a whole new set of the hand-held powered machine when the drive power source of the powered operation lever fails, resulting in an increase in the purchase cost, without being aware of the possibility of combining an powered operation lever with different types of working devices. Moreover, to possess multiple hand-held powered machines adapted to the corresponding works causes an increase in the burden of storage space.

It is an object of the present invention to provide a hand-held powered working machine and a power transmission joint therefor which allows the drive front end portion of the drive shaft of the operation lever and the power input end portion of the working device to co-rotatably engage with each other, even if the drive front end portion of the drive shaft and the power input end portion of the working device have different or non-matching shapes to prevent direct rotational engagement with each other, making it possible to reduce the purchase cost for replacement and the burden of storage space.

To achieve the above object, the present invention provides a hand-held powered working machine comprising: a hollow operation pipe; a drive power source mounted on a rear portion of the operation pipe; a drive shaft provided in the operation pipe and having a drive rear end driven by the drive power source and further having a drive front end portion on a front side thereof; and a working device having, on a rear side thereof, a power input end portion to be driven by the drive shaft, characterized in that the working machine further comprises a power transmission joint having, on a front side thereof, a power input fitting portion or a power input engaging shaft portion co-rotatably engaged with the power input end portion of the working device, and also having, on a rear side thereof, a drive shaft fitting portion co-rotatably engaged with the drive front end portion of the drive shaft.

According to the hand-held powered working machine of the present invention, the drive front end portion of the drive shaft and the power input end portion of the working device can co-rotatably engage with each other, even if the drive front end portion and the power input end portion have different or non-matching shapes to prevent direct rotational engagement with each other. This makes it possible to freely combine powered operation levers (shafts) of one manufacturer or model with working devices of another different manufacturer or model. Thus, it is possible to replace only the powered operation lever, or replace the working device by another with a desired model adapted to the purpose of working. This increases convenience for users, and reduces cost and storage space. Furthermore, this eliminates need for checking and matching the two shapes, i.e. the shape of the drive front end portion of the drive shaft and the shape of the power input end portion of the working device, which is time-consuming and likely to cause wrong matching.

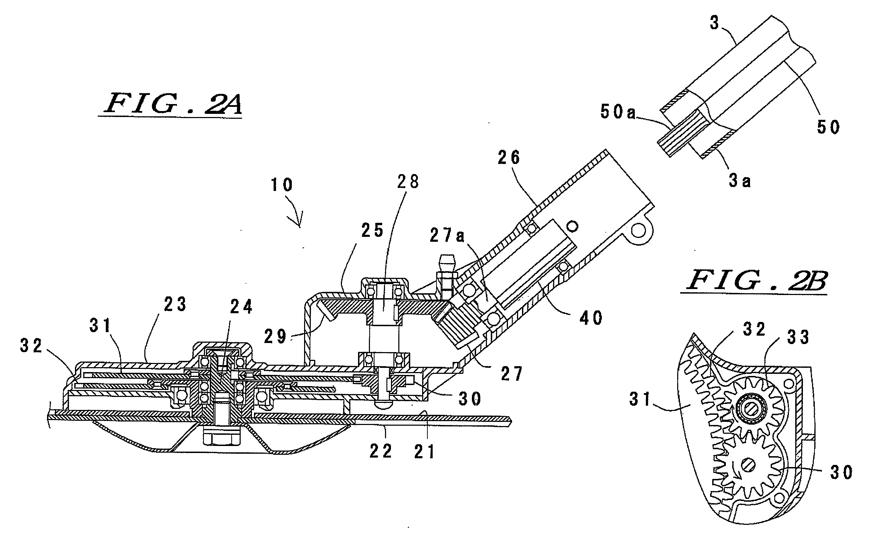

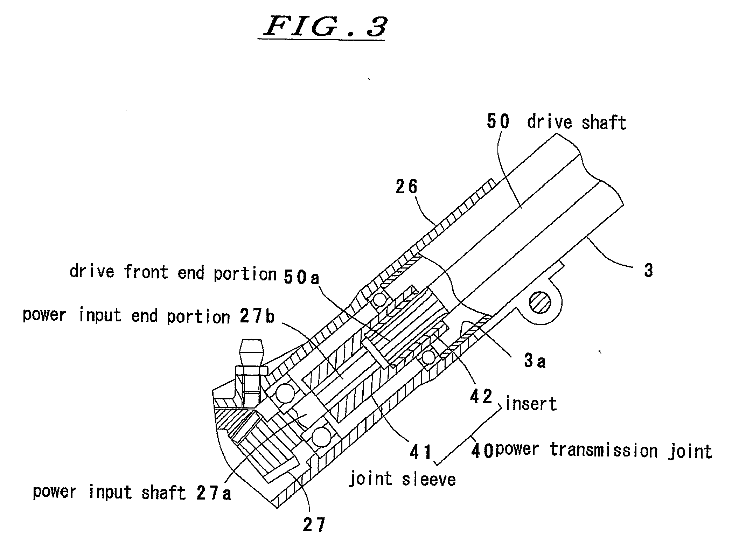

Note that in the prior art it is known to divide a drive shaft into two drive shaft parts at a mid-length position of the drive shaft, and connect the two drive shaft parts by a pair of chucks as a power transmission joint as disclosed, for example, in Japanese Utility Model Publication Sho 62-7857 (FIGs. 2 and 3) and Japanese Registered Utility Model 3,119,138 (FIGs. 3 to 8). However, the power transmission joint in the prior art is completely different from that of the present invention in the structure, operation and effect. Further note that multiple kinds of power transmission joints with different shapes and/or sizes are prepared, and a desired one of the prepared power transmission joints for each use is selected therefrom. Examples of usable engagements or fittings in shape are spline engagement, serration engagement, engagement between square rod and square hole (each of which can be of two parallel surface), and so on.

The present invention also provides a power transmission joint for the hand-held powered working machine.

Preferably, the power transmission joint comprises a joint sleeve and an insert, in which the power input fitting portion co-rotatably engaged with the power input end portion of the working device is formed in a front end portion of the joint sleeve, while the drive shaft fitting portion co-rotatably engaged with the drive front end portion of the drive shaft is formed in the insert, and the insert is fitted and embedded into an insert fitting portion formed in a rear end portion of the joint sleeve. Examples of usable fitting portions are holes with hexagonal, splined, serrated or square shaped inner walls, an inner wall with two parallel surfaces, and so on.

Preferably, the power transmission joint comprises a joint sleeve and an insert, in which the power input engaging shaft portion co-rotatably engaged with the power input end portion of the working device is provided on a front end portion of the joint sleeve, while the drive shaft fitting portion co-rotatably engaged with the drive front end portion of the drive shaft is formed in the insert, which is fitted and embedded into an insert fitting portion formed in a rear end portion of the joint sleeve. Examples of usable power input engaging shaft portions are shafts with hexagonal, splined, serrated or square shapes, a shape with two parallel surfaces, and so on.

Both of the above preferred modes using an insert is advantageous because when it is necessary to change the drive shaft to another with a differently shaped drive front end portion in the hand-held powered working machine, it is possible to use the working machine by only replacing the insert to another with a shape matching the changed drive front end portion, allowing an easy and low cost replacement.

Further preferably, the insert is formed of a plurality of stacked ring plates. This makes it possible to prepare the insert easily at a low cost.

### Brief Description of the Figures

FIG. 1 is a schematic perspective view an example of a hand-held powered working machine according to the present invention and exchangeable working devices therefor;
FIG. 2A is a schematic cross-sectional side view showing a mowing device and a drive front end portion of an operation pipe, while FIG. 2B is a schematic cross-sectional plan view showing inside of the mowing device;
FIG. 3 is a schematic cross-sectional side view showing connection of the drive front end portion of the operation pipe and a power input end portion of the mowing device by using a power transmission joint;
FIG. 4A is a schematic perspective view (exploded) of a power transmission joint according to a first embodiment of the present invention as seen from diagonally forward, and FIG. 4B is a schematic perspective view (exploded) of the power transmission joint as seen from diagonally backward, while FIG. 4C is a schematic cross-sectional side view of the power transmission joint, and FIG. 4D is a schematic partially cross-sectional side view of the power transmission joint;
FIG. 5A is a set of front views of examples of joint sleeves as seen in the direction of arrow F, and FIG. 5B is a set of rear views of the examples of the joint sleeves as seen in the direction of arrow R in FIG. 4D;
FIG. 6 is a set of front (or rear) views of examples of usable inserts;
FIG. 7A is a schematic perspective view (exploded) of a power transmission joint according to a second embodiment of the present invention as seen from diagonally forward, while FIG. 7B is a schematic perspective view (exploded) of the power transmission joint as seen from diagonally backward;
FIG. 8A is a schematic cross-sectional side view showing connection of a drive front end portion of an operation pipe and a power input end portion of a power input shaft of a mowing device (working device) by using a power transmission joint according to a third embodiment of the present invention, while FIG. 8B is a schematic cross-sectional side view (exploded) showing how they are connected;
FIG. 9 is a schematic perspective view (exploded) of the power transmission joint according to the third embodiment;
FIGS. 10A, 10B and 10C are a schematic cross-sectional side view, a schematic left side view and a schematic right side view of the power transmission joint, respectively, while FIGs. 10D, 10E and 10F are a schematic cross-sectional side view, a schematic left side view and a schematic right side view of a joint sleeve of the power transmission joint, respectively, according to the third embodiment;
FIG. 11 is a set of front (or rear) views of examples of a shaft member;
FIG. 12 is a schematic cross-sectional side view showing connection of a drive front end portion of an operation pipe and a power input end portion of a power input shaft of a mowing device (working device) by using a power transmission joint according to a fourth embodiment of the present invention; and
FIGs. 13A and 13B are a schematic perspective view (exploded) seen from diagonally forward and a schematic perspective view (exploded) seen from diagonally backward, respectively, of the power transmission joint according to the fourth embodiment.

### Detailed Description for Carrying Out the Invention

Preferred modes for carrying out the present invention will be described hereinafter with reference to the figures. It is to be understood that the modes of embodiments herein are not intended as limiting, or encompassing the entire scope of, the invention. Note that like parts are designated by like reference numerals or characters throughout the drawings.

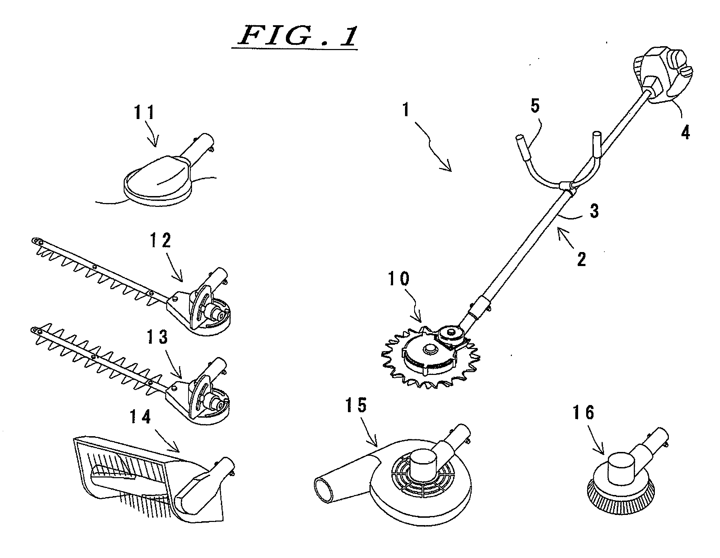

FIG. 1 is a schematic perspective view an example of a hand-held powered working machine 1 according to the present invention and exchangeable working devices therefor. The hand-held powered working machine 1 shown in FIG. 1 is a mower comprising a powered operation lever 2 (powered with a drive power source such as an engine or an electric motor) having a mowing device 10 (working device) attached to a drive front end thereof. The powered operation lever 2 comprises a hollow operation pipe 3 having an engine or an electric motor as a drive power source 4 mounted on a rear thereof and also having a two-hand handle 5 attached to a mid-length position thereof. Although not shown, a shoulder belt is attached to the operation pipe 3. In place of the mowing device 10, the powered operation lever 2 of the hand-held powered working machine 1 can have various other working devices attached thereto, such as a nylon cord grass cutting device 11, clipper-type moving devices 12, 13, a rotary-type soil cultivating device 14, a blower 15, a rotary brush 15, and so on.

FIG. 2A is a schematic cross-sectional side view showing a mowing device 10 and a drive front end portion 3a of an operation pipe 3, and FIG. 2B is a schematic cross-sectional plan view showing inside of the mowing device 10, while FIG. 3 is a schematic cross-sectional side view showing connection of the drive front end portion 3a of the operation pipe 3 and a power input end portion 27b of a power input shaft 27a of the mowing device 10 by using a power transmission joint 40. Referring to FIG. 2A, the mowing device 10 comprises a main gear case 23 below which rotary blades, i.e. an upper blade 21 and a lower blade 23, are provided. The main gear case 23 rotatably supports a main shaft 24 at a substantially central portion thereof. The main shaft 24 loosely supports a large diameter spur gear 32 on a lower portion thereof, and coaxially and co-rotatably engages and supports a large diameter spur gear 31 on an upper portion thereof. A rear gear case 25 covers and is attached to a rear upper surface of the main gear case 23, and has a short tubular portion 26 formed on an end thereof and extending diagonally upward and backward from a center of the end thereof.

The short tubular portion 26 has a rear portion for inserting the drive front end portion 3a of the operation pipe 3 therein, and has a front portion for rotatably supporting a power input shaft 27a of a small diameter bevel gear 27 on an inner wall thereof. The small diameter bevel gear 27 is meshed with a large diameter bevel gear 29 which is coaxially and co-rotatably supported by a shaft 28 in the rear gear case 25. As shown in FIGs. 2A and 2B, a small diameter spur gear 30 to rotate together with the large diameter bevel gear 29 is located in a rear section of the main gear case 23, and is meshed with the large diameter spur gear 31 supported on the upper portion of the main shaft 24 so as to rotate the lower blade 22. Further, the small diameter spur gear 30 is meshed with an intermediate spur gear 33 in the rear section of the main gear case 23, and at the same time the intermediate spur gear 33 is meshed with the large diameter spur gear 32 supported on the lower portion of the main shaft 24 so as to rotate the upper blade 21 in a direction opposite to the lower blade 22.

Referring to FIG. 3, the power input shaft 27a of the small diameter bevel gear 27 has a power input end portion 27b forming a rear end thereof, while the operation pipe 3 has provided therein a drive shaft 50 having a drive front end portion 50a and a drive rear end driven by the drive power source 4. As shown in FIG. 2A and FIG. 3, when the drive front end portion 3a of the operation pipe 3 is inserted into the short tubular portion 26 of the mowing device 10 (working device) and fastened and fixed there, the mowing device 10 is attached to the drive front end portion 3a of the operation pipe 3. At the same time when the mowing device 10 is attached to the drive front end portion 3 a of the operation pipe 3, both the power input end portion 27b of the power input shaft 27a and the drive front end portion 50a of the drive shaft 50 are inserted into a power transmission joint 40, and are co-rotatably connected to each other by the power transmission joint 40, whereby the rotational force of the drive power source (engine or electric motor) 4 output from the drive power source 4 is transmitted to the power input end portion 27b of the mowing device 10 (working device) through the drive shaft 50.

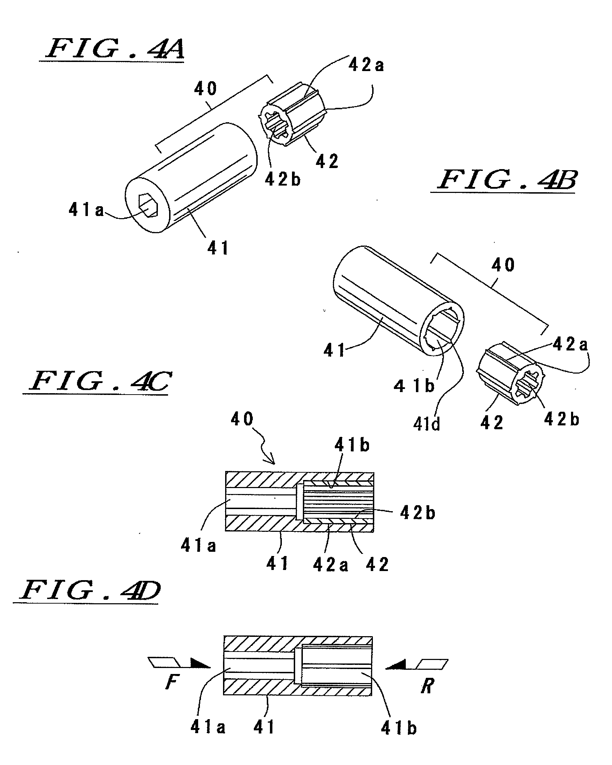

Multiple kinds of power transmission joints 40 are prepared, adapted to multiple shapes of power input end portions 27b of power input shafts 27a and multiple shapes of drive front end portions 50a of drive shafts 50. The most suitable power transmission joint 40 for each use is selected therefrom. In the case of the power transmission joint 4 shown in FIG. 3, the power input end portion 27b is a hexagonal shaft, while the drive front end portion 50a is a spline shaft. Specific embodiments of the power transmission joint 4 for connecting the power input end portion 27b of the power input shaft 27a and the drive front end portion 50a of the drive shaft 50 are shown in FIGs. 4 to 13, and will be described in detail below with reference to these figures.

### [First Embodiment]

FIG. 4A is a schematic perspective view (exploded) of a power transmission joint 40 according to a first embodiment of the present invention as seen from diagonally forward, and FIG. 4B is a schematic perspective view (exploded) of the power transmission joint 40 as seen from diagonally backward, while FIG. 4C is a schematic cross-sectional side view of the power transmission joint 40, and FIG. 4D is a schematic partially cross-sectional side view of the power transmission joint 40. The power transmission joint 40 shown in FIGs. 4A to 4D comprises a joint sleeve 41 and an insert 42 which is fitted and embedded into the joint sleeve 41, or more specifically, into a hole or rear fitting portion (insert fitting portion) 41b of the joint sleeve 41 on a rear side of the joint sleeve 41 as described below, so as to co-rotate or rotate together with the joint sleeve 41.

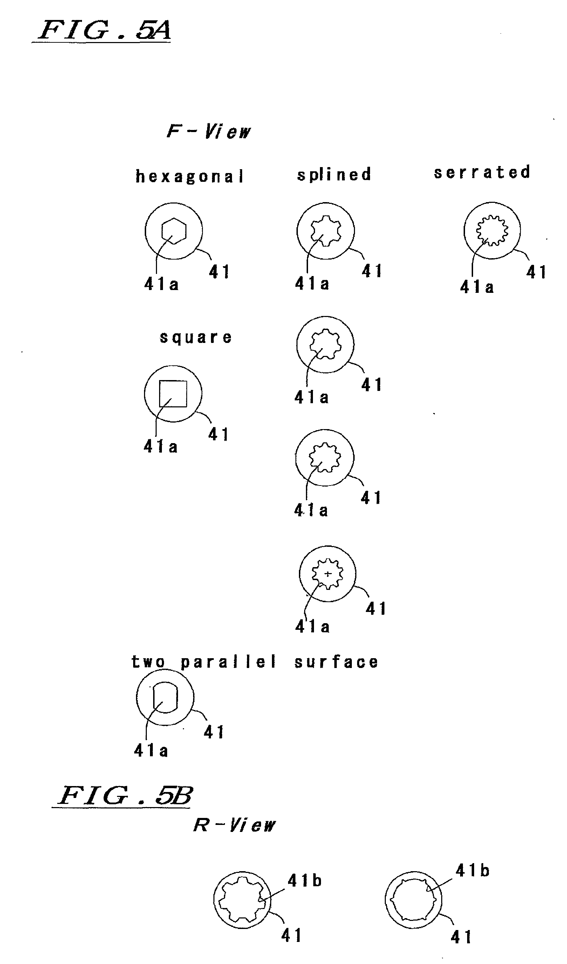

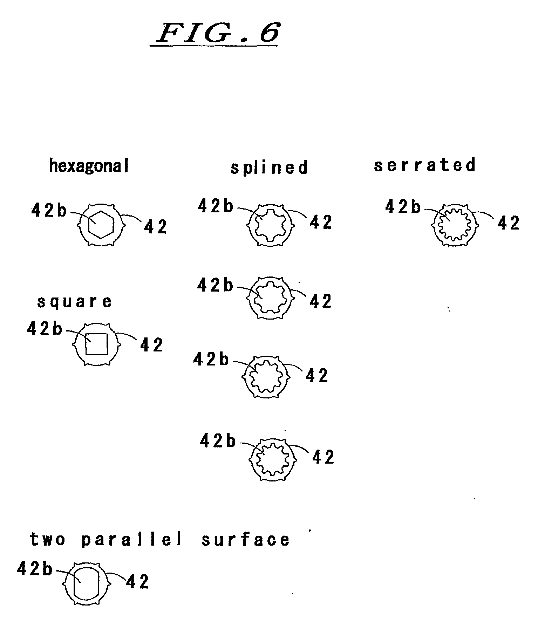

More specifically, as shown in FIGs. 4A, 4B and 4D, the joint sleeve 41 has, on a front side (output side) thereof, a hexagonal hole as a power input fitting portion 41a to fit the power input end portion 27b of the power input shaft 27a of the mowing device 10 (working device). The joint sleeve 41 also has, on a rear side (input side) thereof, a hole as an insert fitting portion (rear fitting portion) 41b (to fit the insert 42) having six axially extending grooves 41d formed at six equiangular intervals on an inner wall thereof. Both fitting portions 41a, 41b have substantially the same depth, and can have a bottom. The insert 42 has an outer diameter to be substantially fitted and embedded into the insert fitting portion 41b of the joint sleeve 4, and has axially extending ribs 42a on the outer peripheral surface thereof to engage with the grooves 41d. Further, the insert 42 has a hole as a drive shaft fitting portion 42b having a splined inner wall surface. FIG. 5A is a set of front views of examples of joint sleeves 41 showing eight shapes of power input fitting portions 41a as seen in the arrow F direction in FIG.4D, and FIG. 5B is a set of rear views of the examples of the joint sleeves 41 showing two shapes of insert fitting portions 41b, each usable for the power transmission point 40, as seen in the arrow R direction in FIG. 4D. FIG. 6 is a set of front (or rear) views of examples of usable inserts 42 showing eight shapes of drive shaft fitting portions 42b. Thus, appropriate joint sleeves 41 are prepared by combining the shapes shown in FIG. 5A and those of FIG. 5B, so that the power transmission joint 40 can be formed of any of such prepared joint sleeves 41 and an insert 42 selected from the above examples or shapes.

The power transmission joint 40 is selected and used as follows. First, a joint sleeve 41 matching the shape of the power input end portion 27b of the power input shaft 27a is selected e.g. from the various examples or shapes, and the power input fitting portion (front fitting portion) 41a on the front side of the joint sleeve 41 is fitted into the power input end portion 27b. Then, an insert 42 with a hole (driving shaft fitting portion) 42b having an inner wall surface matching the shape of the drive front end portion 50a of the drive shaft 50 shown in FIG. 3 is selected e.g. from the various examples or shapes, and is fitted and embedded into the insert fitting portion 41b on the rear side of the joint sleeve 41. Thereafter, the drive front end portion 50a of the drive shaft 50 is inserted into the hole (drive shaft fitting portion) 42b of the insert 42, whereby the power input end portion 27b of the power input shaft 27a and the drive front end portion 50a of the drive shaft 50 are co-rotatably connected to each other by the power transmission joint 40.

### [Second Embodiment]

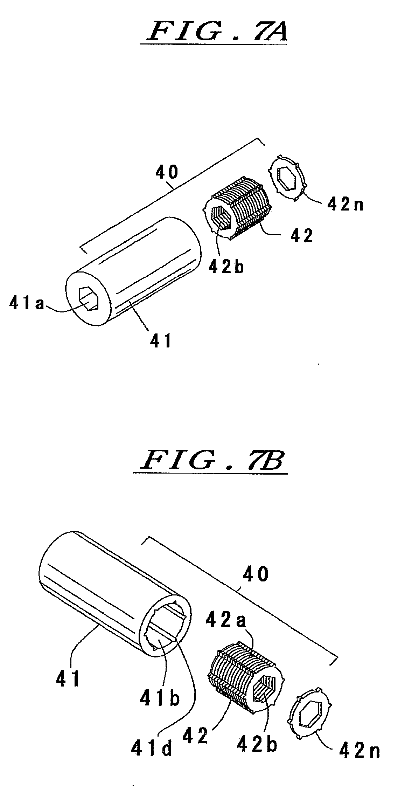

FIG. 7A is a schematic perspective view (exploded) of a power transmission joint 40 according to a second embodiment of the present invention as seen from diagonally forward, and FIG. 7B is a schematic perspective view (exploded) of the power transmission joint 40 as seen from diagonally backward. The power transmission joint 40 shown in FIGs. 7A and 7B comprises a joint sleeve 41 and an insert 42 which is fitted and embedded into the joint sleeve 41 similarly as in the first embodiment except for the manufacture or preparation of the insert 42. More specifically, the joint sleeve 41 of the second embodiment is the same in structure and function as that of the first embodiment shown in FIGs. 4A and 4B, whereas the insert 42 of the second embodiment is formed of a plurality of stacked ring plates 42n having the same opening shape. The insert 42 shown in FIGs. 7A and 7B corresponds to that shown in FIG. 6 with label "hexagonal". Similarly as in the first embodiment, the power transmission joint 40 of the second embodiment can be formed of a joint sleeve 41 and an insert 42 selected from the shapes or examples shown in the first embodiment. An advantage of the present embodiment that the insert 42 of the stacked ring plates 42n can be easily formed at a low cost by pressing.

### [Third Embodiment]

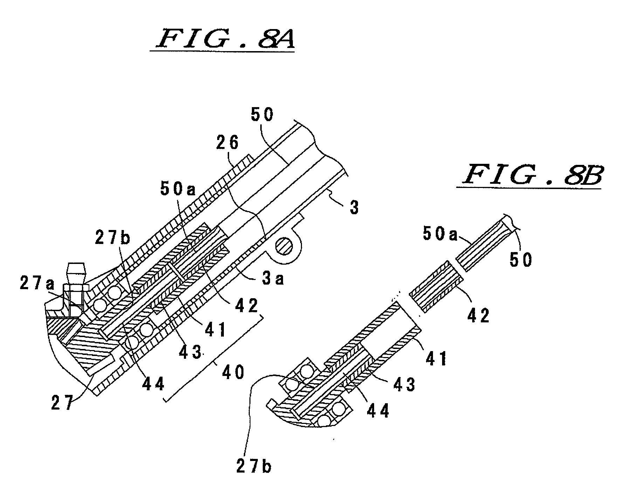

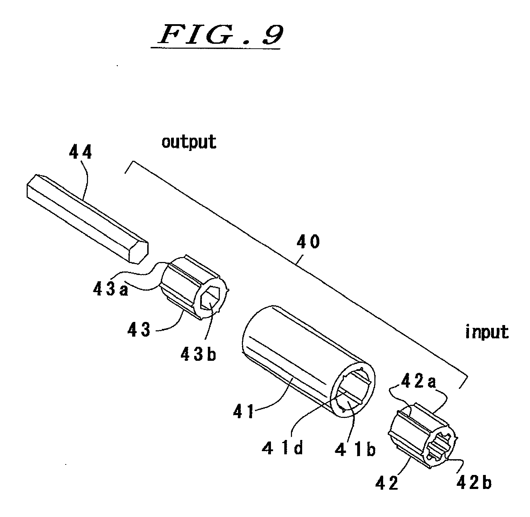

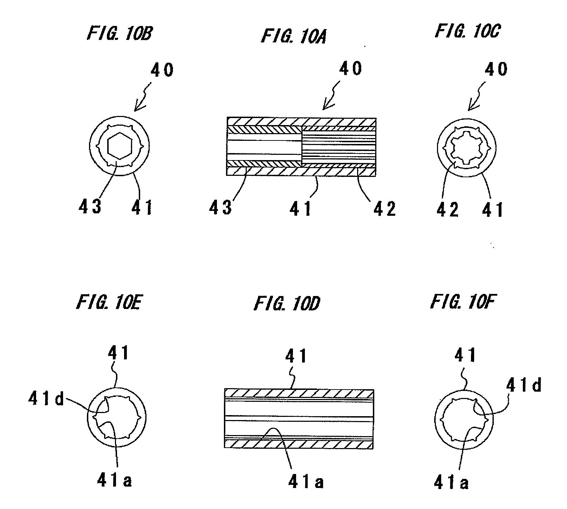

FIG. 8A is a schematic cross-sectional side view showing connection of a drive front end portion 3a of an operation pipe 3 and a power input end portion 27b of a power input shaft 27a of a mowing device (working device) 10 by using a power transmission joint 40 according to a third embodiment of the present invention, while FIG. 8B is a schematic cross-sectional side view (exploded) showing how they are connected. FIG. 9 is a schematic perspective view (exploded) of the power transmission joint 40 according to the third embodiment. FIGs. 10A, 10B and 10C are a schematic cross-sectional side view, a schematic left side view and a schematic right side view of the power transmission joint 40, respectively, while FIGs. 10D, 10E and 10F are a schematic cross-sectional side view, a schematic left side view and a schematic right side view of a joint sleeve 41 of the power transmission joint 40, respectively, according to the third embodiment. As shown in FIGs. 8A and 8B, the power input end portion 27b of the power input shaft 27a in the third embodiment is a through hole formed through the power input shaft 27a or a non-through hole formed in a rear end of the power input shaft 27a. Referring to FIG. 9 and FIGs. 10A to 10F, the power transmission joint 40 of the third embodiment comprises, in addition to a joint sleeve 41, two inserts 42, 43 and a shaft member 44 (power input engaging shaft portion) which is provided for the power transmission joint 40 to adapt to the hole of the power input end portion 27b.

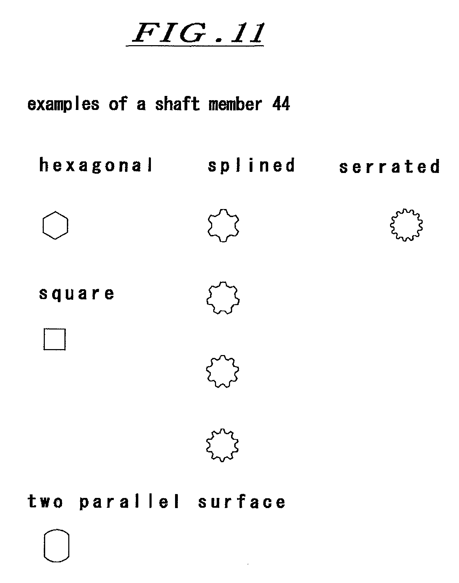

More specifically, as shown in FIG. 9 and FIGs. 10E and 10F, the joint sleeve 41 has a hole therethrough as an insert fitting portion 41b having six axially extending grooves 41d formed at six equiangular intervals on an inner wall thereof. The insert 42 (input side) and the insert 43 (output side) have an outer diameter to be substantially fitted and embedded into the insert fitting portion 41b of the joint sleeve 41, and have axially extending ribs 42a and 43a, respectively, on the outer peripheral surface thereof to engage with the grooves 41d. Further, the two inserts 42 and 43 have holes 42b and 43b as a drive shaft fitting portion 42b and an engaging shaft fitting portion 43b, respectively, which have shapes adapted to those of the drive front end portion 50a of the drive shaft 50 and the shaft member 44 described below, respectively. Each of the inserts 42, 43 has a length of approximately half of that of the joint sleeve 41. The examples of inserts 42 with eight shapes of drive shaft fitting portions 42b shown in FIG. 6 can be used as both the insert 42 and the insert 43 here. FIG. 11 is a set of front (or rear) views of examples of a shaft member 44 showing eight shapes thereof. Thus, appropriate joint sleeves 41, inserts 42, 43 and shaft members 44 are prepared from such examples or shapes, so that the power transmission joint 40 can be formed of a joint sleeve 41, two inserts 42, 43 (rear side and front side inserts) and a shaft member 44 selected from such examples or shapes.

The power transmission joint 40 is selected and used as follows to connect the power input end portion 27b of the power input shaft 27a and the drive front end portion 50a of the drive shaft 50. First, as shown in FIG. 8B, a shaft member 44 matching the shape of the power input end portion 27b of the power input shaft 27a is selected, and a front end of the shaft member 44 is inserted into the power input end portion 27b. Then, an insert 43 with a hole (engaging shaft fitting portion) 43b matching the shape of the shaft member 44 is selected, and is fitted into a rear end of the shaft member 44. Thereafter, a front end of the joint sleeve 41 is fitted into the insert 43 (i.e. the insert 43 is fitted and embedded into the front end of the joint sleeve 41) by fitting the ribs 43 a of the insert 43 into the grooves 41d of the joint sleeve 41, whereby the power input end portion 27b and the joint sleeve 41 (front end portion of the joint sleeve 41) are co-rotatably connected to each other.

Next, an insert 42 with a hole (drive shaft fitting portion) 42b matching the shape of the drive front end portion 50a of the drive shaft 50 is selected, and is fitted and embedded into a rear end of the joint sleeve 41 by fitting the ribs 42a of the insert 42 into the grooves 41d of the joint sleeve 41. Finally, the drive front end portion 50a of the drive shaft 50 is inserted into the hole (drive shaft fitting portion) 42b of the insert 42, whereby the joint sleeve 41 (rear end of the joint sleeve 41) and the drive shaft 50 (drive front end portion 50a of the drive shaft 50) are co-rotatably connected to each other. Thus, the power input shaft 27a of the mowing device (working device) 10 and the drive shaft 50 of the operation pipe 3 (or operation lever 2) are co-rotatably connected to each other by the power transmission joint 40. A feature of the power transmission joint 40 according to the present embodiment is that once the joint sleeve 41 is attached to the power input end portion 27b first by using the shaft member 44 and the front side insert 43, it is only necessary to select and use the rear side insert 42 adapted to the shape of the front end 50a of the drive shaft 50. This advantageously makes it possible to achieve the connection easily at a low cost.

### [Fourth Embodiment]

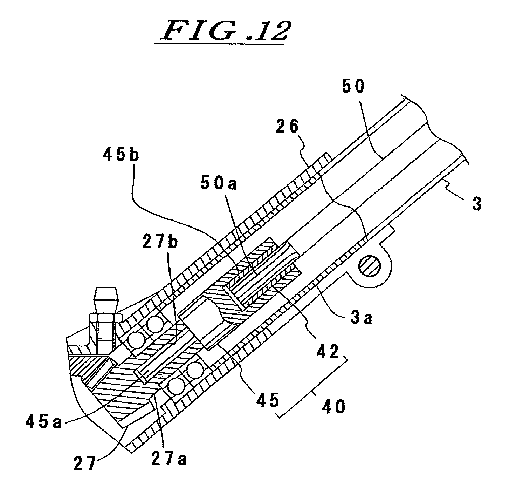

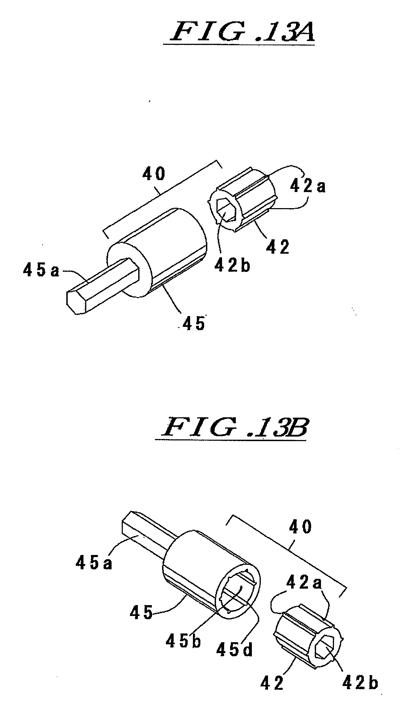

FIG. 12 is a schematic cross-sectional side view showing connection of a front end portion 3a of an operation pipe 3 and a power input end portion 27b of a power input shaft 27a of a mowing device (working device) 10 by using a power transmission joint 40 according to a fourth embodiment of the present invention. FIGs. 13A and 13B are a schematic perspective view (exploded) seen from diagonally forward and a schematic perspective view (exploded) seen from diagonally backward, respectively, of the power transmission joint 40 according to the fourth embodiment. Similarly as in the third embodiment, the power transmission joint 40 of the present embodiment shown in FIGs. 12, 13A and 13B has, at a rear end of a power input shaft 27a, a power input end portion 27b which is a hole formed in the power input shaft 27a. In the present embodiment, the power transmission joint 40 comprises a joint sleeve 45 and an insert 42.

The joint sleeve 45 has a bottomed and thick-walled cylinder portion on a rear side thereof, as an insert fitting portion 45b, and a shaft portion 45a (power input engaging shaft portion) on a front side thereof. The insert fitting portion (cylinder portion) 45b has six axially extending grooves 45d formed at six equiangular intervals on an inner wall thereof. The insert fitting portion 45b seen in its rear view has a shape of e.g. one of those shown in FIG. 5B, while the shaft member 44 seen in its front view has a shape of e.g. one of those shown in FIG. 11. Thus, appropriate joint sleeves 45 are prepared by combining the shapes of shaft portions 45a shown in FIG. 11 and the shapes of insert fitting portions (cylinder portions) 45b shown in FIG. 5B.

Note that the shaft portion 45a can be either integrally formed with the insert fitting portion (cylinder portion) 45b, or separately inserted and fixed at a rear end thereof into a through hole or a non-through hole (not shown) formed in a front end of the insert fitting portion (cylinder portion) 45b. The inserts 42 shown in FIGs. 4A, 4B and 7 can be used as the insert 42 of the present embodiment, and the shapes shown in FIG. 6 can be used for the insert 42 of the present embodiment. Thus, appropriate inserts 42 and joint sleeves 45 with appropriate insert fitting portions 45b and shaft portions 45a are prepared from such examples or shapes, so that the power transmission joint 40 can be formed of an insert 42 and a joint sleeve 45 with an insert fitting portion 45b and a shaft portion 45a selected from such examples or shapes.

The power transmission joint 40 is selected and used as follows to connect the power input end portion 27b of the power input shaft 27a and the drive front end portion 50a of the drive shaft 50 as shown in FIG. 12. First, a joint sleeve 45 with a shaft portion 45a matching the shape of the power input end portion 27b is selected, while an insert 42 matching the shape of the drive front end portion 50a is also selected. Then, the selected shaft portion 45a is inserted into the power input end portion 27b. Thereafter, the selected insert 42 is fitted and embedded into the insert fitting portion (cylinder portion) 45b of the joint sleeve 45 by fitting the ribs 42a of the insert 42 into the grooves 45d of the joint sleeve 45. Finally, the drive front end portion 50a of the drive shaft 50 is inserted and fitted into the drive shaft fitting portion 42b of the joint sleeve 45, whereby the power input end portion 27b and the drive front end portion 50a are co-rotatably connected by the power transmission joint 40. The power transmission joint 40 of the present embodiment allows that once the joint sleeve 45 is attached to the power input end portion 27b by inserting the shaft portion 45a of the joint sleeve 45 into the power input end portion 27b as shown in FIG. 12, it is only necessary to select and use the insert 42 adapted to the shape of the front end 50a in order to make it possible to achieve, easily at a low cost, the connection of the power input end portion 27b of the power input shaft 27a and the drive front end portion 50a of the drive shaft 50, adapted to the difference in shape of the drive front end portion 50a.

It is to be noted that the present invention is not limited to the above embodiments, and various modifications are possible according to the present invention. For example, each of the power transmission joints in the above embodiments uses an insert or inserts. However, it is also possible to allow the joint sleeve of the power transmission joint to have, at a rear end portion thereof, a fitting portion having a structure to directly co-rotatably engage with the drive front end portion of the drive shaft without using an insert, by preparing various joint sleeves with various fitting portions which are adapted to various shapes of end portions of drive shafts as needed.

## Claims

1. A hand-held powered working machine (1) comprising:
a hollow operation pipe (3);
a drive power source (4) mounted on a rear portion of the operation pipe (3);
a drive shaft (50) provided in the operation pipe (3) and having a drive rear end driven by the drive power source (4) and further having a drive front end portion (50a) on a front side thereof; and
a working device (10) having, on a rear side thereof, a power input end portion (27b) to be driven by the drive shaft (50),
**characterized in that** the working machine (1) further comprises a power transmission joint (40) having, on a front side thereof, a power input fitting portion (41a) or a power input engaging shaft portion (44;45a) co-rotatably engaged with the power input end portion (27b) of the working device (10), and also having, on a rear side thereof, a drive shaft fitting portion (42b) co-rotatably engaged with the drive front end portion (50a) of the drive shaft (50).

2. The hand-held powered working machine (1) according to claim 1, **characterized in that** the power transmission joint (40) comprises a joint sleeve (41) and an insert (42), in which the power input fitting portion (41a) co-rotatably engaged with the power input end portion (27b) of the working device (10) is formed in a front end of the joint sleeve (41), while the drive shaft fitting portion (42b) co-rotatably engaged with the drive front end portion (50a) of the drive shaft (50) is formed in the insert (42), and the insert (42) is fitted and embedded into an insert fitting portion (41b) formed in a rear end of the joint sleeve (41).

3. The hand-held powered working machine (1) according to claim 1, **characterized in that** the power transmission joint (40) comprises a joint sleeve (41;45) and an insert (42), in which the power input engaging shaft portion (44;45a) co-rotatably engaged with the power input end portion (27b) of the working device (10) is provided on a front end of the joint sleeve (41;45), while the drive shaft fitting portion (42b) co-rotatably engaged with the drive front end portion (50a) of the drive shaft (50) is formed in the insert (42), and the insert (42) is fitted and embedded into an insert fitting portion (41b) formed in a rear end of the joint sleeve (41;45).

4. The hand-held powered working machine (1) according to claim 2 or claim 3, **characterized in that** the insert (42) is formed of a plurality of stacked ring plates (42n).

5. A power transmission joint (40) for the hand-held powered working machine (1) according to claim 1, 2, 3 or 4.
